# FASCICULE DE BREVET EUROPEEN

(11) **EP 0 836 341 B1**
(45) Date de publication et mention de la délivrance du brevet: **26.11.2003**
(21) Numéro de dépôt: 97460035.5
(22) Date de dépôt: 05.09.1997
(51) Int. Cl.: H04Q 7/34

(54) **Système et procédé de contrôle d'un réseau de radiocommunication cellulaire au moyen d'un ensemble d'analyseurs de protocole et de stations mobiles**
System und Verfahren zum Überwachen eines zellularen Funkkommunikationsnetzes mit Hilfe von Protokollanalysatoren und Mobilstationen
System and method for controlling a cellular radio communications network with the help of protocol analysers and mobile stations

(30) Priorité: 17.09.1996 FR 9611531
(43) Date de publication de la demande: 15.04.1998
(73) Titulaire: CEGETEL-ETUDES ET GESTION, 92800 Puteaux (FR)
(72) Inventeur: Rémy, Jean-Gabriel, 94170 Le Perreux (FR)
(74) Mandataire: Vidon, Patrice

(56) Documents cités:
- EP-A- 0 710 043
- WO-A-95/21511
- DE-A- 19 533 472
- FINGERLE B-M: "GSM SIGNALISIERUNG IN DER PRAXIS" ITG-FACHBERICHTE, no. 124, septembre 1993, NEU-ULM, DE, pages 423-432, XP000534209

## Description

Le domaine de l'invention est celui des réseaux de radiocommunication cellulaire avec des stations mobiles, notamment mais non exclusivement selon le standard GSM ("Global System for Mobile communications" en langue anglaise).

Plus précisément, l'invention concerne un système et un procédé de contrôle d'un réseau de radiocommunication cellulaire.

Un tel contrôle a pour but d'optimiser le fonctionnement du réseau de radiocommunication cellulaire et d'en dépister les défaillances au plus vite. Il s'agit également à travers ce contrôle d'évaluer la qualité du service rendu.

Pour effectuer le contrôle d'un réseau, il convient d'en avoir une vue d'ensemble. En effet, seule une vue d'ensemble peut permettre de mettre en évidence les lacunes et les défaillances du réseau, et d'en diagnostiquer les causes. Plus le diagnostic est rapide et précis, plus les corrections peuvent être mises en place rapidement, ceci afin de réduire autant se faire que peut les sources de mécontentement chez les utilisateurs.

On connaît principalement deux techniques de contrôle, permettant chacune d'obtenir des vues distinctes du fonctionnement d'un réseau.

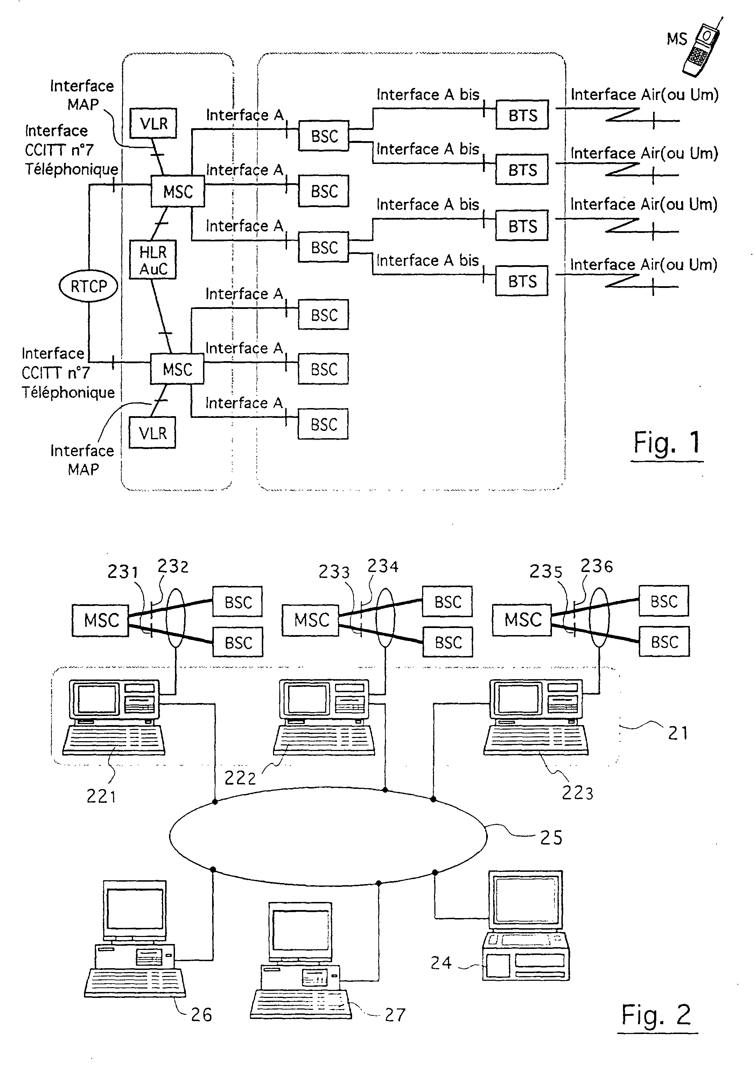

Avant de présenter ces deux techniques connues de contrôle de réseau, avec leurs inconvénients respectifs, on rappelle brièvement, en relation avec la figure 1, quelques caractéristiques structurelles d'un réseau cellulaire.

D'une façon générale, un réseau cellulaire comprend au moins un commutateur du service mobile (ou MSC, dans le standard GSM) permettant l'interconnexion du réseau cellulaire avec un réseau téléphonique fixe (par exemple, le Réseau Téléphonique Commuté Public (RTCP)). Au moins un contrôleur de station de base (ou BSC, dans le standard GSM) est relié à chaque commutateur du service mobile (MSC). Au moins une station de base (ou BTS, dans le standard GSM) est reliée à chaque contrôleur de station de base (BSC). Chaque station de base (BTS) est associée à une cellule géographique distincte dans laquelle peuvent se déplacer des stations mobiles (MS). Par ailleurs, diverses bases de données spécialisées (HLR (registre des abonnées nominaux), VLR (registre des abonnés visiteurs), AuC (centre d'authentification des abonnés), EIR (base d'enregistrement des stations autorisées d'usage)) sont reliées à chaque commutateur du service mobile (MSC).

Classiquement, on distingue notamment les cinq types d'interfaces suivants :
- les interfaces Air (ou Um), situées chacune entre une station mobile (MS) et la station de base (BTS) de la cellule géographique dans laquelle se trouve cette station mobile,
- les interfaces Abis, situées chacune entre une station de base (BTS) et le contrôleur de station de base (BSC) correspondant,
- les interfaces A, situées chacune entre un contrôleur de station de base (BSC) et le commutateur du service mobile (MSC) correspondant,
- les interfaces "CCITT n° 7 téléphonique" (ISUP, TUP, SSUTR2), situées chacune entre un commutateur du service mobile (MSC) et le réseau téléphonique fixe (RTCP) correspondant, ou entre deux commutateurs du service mobile (MSC), ou encore entre un commutateur du service mobile (MSC) et un centre de transit ;
- les interfaces MAP (pour Mobile Application Part en langue anglaise), situées chacune entre un commutateur du service mobile (MSC) et une base de données spécialisée (HLR, VLR, AuC, EIR).

La première technique connue de contrôle de réseau consiste à utiliser des "vigies", c'est-à-dire du personnel parcourant une zone à tester avec des appareils de mesure appelés mobiles de trace (ces mobiles de trace sont en général des téléphones mobiles spécialisés et reliés à des ordinateurs pour stocker les relevés). Les mesures (de champ, de TEB, etc) sont associées à la position géographique où elles ont été réalisées grâce à des balises de localisation du type GPS (Global Positioning System en langue anglaise). On peut ainsi bâtir des cartes de couverture indiquant les zones à problèmes du point de vue des interfaces Air.

La seconde technique connue de contrôle de réseau consiste à utiliser du personnel pour aller brancher, en fonction de la zone géographique à examiner, un ou plusieurs analyseurs de protocole sur une ou plusieurs interfaces (Abis, A, "CCITT N° 7 téléphonique" ou encore MAP) du réseau. Chaque analyseur de protocole permet d'intercepter les trames de signalisation qui circulent sur l'interface surveillée. Après dépouillement, on peut en déduire des informations très intéressantes sur le fonctionnement du réseau, et notamment le comportement du réseau en termes de trafic, d'échec d'appels ou encore de transfert intercellulaire (ou handover en langue anglaise).

Chacune de ces deux techniques connues consiste donc à mettre en oeuvre une surveillance au niveau de certaines interfaces de ce réseau, à savoir les interfaces Air pour l'une et les interfaces Abis, A, "CCITT N° 7 téléphonique" ou MAP pour l'autre. Elle présentent toutes les deux des inconvénients.

Ainsi, la première technique connue ne fournit qu'un nombre limité d'informations puisqu'elle est mise en oeuvre uniquement au niveau des interfaces Air, sur le canal radio descendant ("downlink" en langue anglaise), fixe vers mobile. Notamment, elle ne permet pas d'obtenir des informations sur les liaisons montantes (mobiles de trace vers réseau cellulaire). En fait, cette technique dite des "vigies" permet de percevoir partiellement la qualité du réseau du point de vue client, et ne permet donc d'obtenir qu'une vision partielle du fonctionnement du réseau.

De plus, avec la première technique connue, la remontée des informations depuis les mobiles de trace est longue et complexe. En effet, actuellement, les données stockées sur chaque mobile de trace sont copiées sur disquettes afin de pouvoir être centralisées et traitées de façon globale. Tout cela implique des délais importants, car à la durée des mesures s'ajoute celle du transfert de données via les disquettes ainsi que celle du dépouillement des résultats.

Par ailleurs, les mobiles de trace utilisés dans la première technique connue sont très coûteux. En effet, leur prix est en général vingt fois plus élevé que celui d'une station mobile classique.

La seconde technique connue nécessite quant à elle un personnel nombreux et qualifié sur le terrain. En effet, au moins une personne qualifiée doit être présente sur chaque site d'enregistrement pour brancher correctement l'analyseur de protocole et le piloter de façon adéquate pour permettre l'obtention d'informations pertinentes pendant la durée limitée du test.

Avec la seconde technique connue, la remontée des informations (depuis les analyseurs de protocole, dans le cas présent) est, de même que pour la première technique connue, longue et complexe. En effet, actuellement, les données stockées sur chaque analyseur de protocole sont copiées sur disquettes afin de pouvoir être centralisées et traitées de façon globale. Tout cela implique des délais importants, car à la durée des mesures s'ajoute celle du transfert de données via les disquettes ainsi que celle du dépouillement des résultats.

Enfin, avec la seconde technique connue, les informations obtenues ne peuvent être associées à aucune information géographique plus fine que la cellule elle-même. En d'autres termes, il est impossible de localiser précisément le segment du réseau cellulaire testé par un analyseur de protocole. Par segment de réseau cellulaire testé, on entend ici la partie de réseau située entre l'interface surveillée (c'est-à-dire celle au niveau de laquelle est branché l'analyseur de protocole) et la ou les stations mobiles concernées (c'est-à-dire celle(s) dont les informations protocolaires transitent sur l'interface surveillée). Cette absence de localisation précise des segments analysés empêche d'obtenir une image de la situation réelle du fonctionnement sur le terrain, et par là même ne permet pas de prendre les mesures éventuellement nécessaires pour corriger un défaut de qualité sur ces segments analysés.

En outre, il est fait également référence au document EP-A-0710 043 (Hewlett-Packard Company) publié le 1 mai 1996 qui décrit une méthode pour surveiller un réseau cellulaire radio mobile utilisant l'information sur la zone de localisation contenue dans les messages de mise à jour de localisation.

L'invention a notamment pour objectif de pallier ces différents inconvénients de l'état de la technique.

Plus précisément, l'un des objectifs de la présente invention est de fournir un système et un procédé de contrôle d'un réseau de radiocommunication cellulaire qui soient plus simples et moins coûteux que les solutions connues (notamment en réduisant le personnel et en ne nécessitant aucun mobile de trace), tout en permettant de réunir un maximum d'informations sur l'état de fonctionnement du réseau.

Un objectif complémentaire de l'invention est de fournir de tels système et procédé qui permettent de réduire les délais entre la phase de mesure et la phase de fourniture, à partir des données obtenues lors des mesures, d'un état de fonctionnement du réseau.

L'invention a également pour objectif de fournir de tels système et procédé qui permettent d'obtenir des vues du fonctionnement du réseau aussi bien du côté opérateur (qui gère le réseau) que du côté client (qui utilise le réseau).

Un autre objectif de l'invention est de fournir de tels système et procédé qui permettent une localisation précise des segments de réseau analysés et l'obtention d'une image de la situation réelle du fonctionnement sur le terrain.

Ces différents objectifs, ainsi que d'autres qui apparaîtront par la suite, sont atteints selon l'invention à l'aide d'un système de contrôle d'un réseau cellulaire de radiocommunication avec des stations mobiles (MS), ledit réseau cellulaire comprenant au moins un commutateur du service mobile (MSC) permettant l'interconnexion du réseau cellulaire avec un réseau téléphonique fixe (RTCP), au moins un contrôleur de station de base (BSC) étant relié à chaque commutateur du service mobile (MSC), au moins une station de base (BTS) étant reliée à chaque contrôleur de station de base (BSC), chaque station de base (BTS) étant associée à une cellule géographique, ledit réseau cellulaire présentant divers types d'interfaces pouvant être observées,
ledit système de contrôle étant caractérisé en ce qu'il comprend :
- des moyens fixes d'enregistrement et d'horodatage (22₁, 22₂, 22₃, 32₁, 32₂, 32₃, 42₁, 42₂, 42₃, 62₁, 62₂, 62₃) d'informations de signalisation transitant par au moins une interface observée de façon à obtenir des informations de signalisation enregistrées et horodatées;
- des moyens fixes de centralisation (24, 34, 44, 64, 25) desdites informations de signalisation enregistrées et horodatées;
- des moyens de génération et d'horodatage d'informations de localisation qui sont en rapport avec lesdites informations de signalisation enregistrées et horodatées de façon à obtenir des informations de localisation horodatées;
- des moyens (45, 10, 20) d'association desdites informations de localisation horodatées auxdites informations de signalisation enregistrées et horodatées, de façon a localiser précisément des segments dudit réseau cellulaire situés en aval de chaque interface sur laquelle des informations de signalisation sont enregistrées.

Préférentiellement, lesdits divers types d'interfaces pouvant être observées comprennent :
- les interfaces Abis, situées chacune entre une station de base (BTS) et le contrôleur de station de base (BSC) correspondant ;
- les interfaces A, situées chacune entre un contrôleur de station de base (BSC) et le commutateur du service mobile (MSC) correspondant ;
- les interfaces "CCITT n° 7 téléphonique" (ISUP, TUP, SSUTR2), situées chacune entre :
   * deux commutateurs du service mobile (MSC), ou
   * un commutateur du service mobile (MSC) et le réseau téléphonique fixe (RTCP) correspondant, ou
   * un commutateur du service mobile (MSC) et un centre de transit ;
- les interfaces MAP, situées chacune entre un commutateur du service mobile (MSC) et une base de données spécialisée (HLR, VLR, AuC, EIR) dudit réseau cellulaire.

Le principe général de l'invention consiste donc à utiliser des moyens d'enregistrement et d'horodatage fixes (c'est-à-dire des analyseurs de protocole dédiés chacun à une interface donnée devant être supervisée) et à centraliser de façon automatique toutes les informations de signalisation prélevées sur ces interfaces (ces dernières pouvant notamment être de l'un ou de plusieurs des types Abis, A, "CCITT n° 7 téléphonique" et MAP).

En d'autres termes, afin de surveiller de façon permanente le réseau, le principe général de l'invention est donc de brancher de façon fixe des analyseurs de protocole sur le réseau (au niveau de certains ou de tous les types d'interfaces suivants : Abis, A, "CCITT n° 7 téléphonique" et MAP), de les faire enregistrer les messages de signalisation transitant par ces interfaces, et de centraliser périodiquement les données stockées par les analyseurs. Ces données centralisées, une fois correctement stockées et mises en forme, pourront alors être utilisées pour dépister les problèmes de fonctionnement du réseau. Les analyses des données de signalisation horodatées portent notamment sur l'étude des réponses en charge et le comportement du réseau.

Il est à noter que l'association d'informations de localisation à des informations de signalisation permet de contrôler le fonctionnement sur le terrain (c'est-à-dire tel que ressenti par le client), et non seulement au niveau système (vu du côté opérateur).

Il est à noter que cette association est particulièrement avantageuse dans le cas des interfaces Abis puisqu'une telle association permet de se passer de tout enregistrement au niveau des interfaces Air (et donc de l'utilisation des stations mobiles de trace qui sont très coûteuses). En effet, dès lors qu'elles sont associées à des positions géographiques précises, les informations de signalisation disponibles au niveau des interfaces Abis sont plus complètes que celles du niveau des interfaces Air.

On peut distinguer ici deux types d'évènements générateurs de messages protocolaires (c'est-à-dire d'informations de signalisation) :
- les communications et les mouvements des abonnés réels ; et
- les scénarios programmés dans des générateurs de messages protocolaires.

Il est à noter que les générateurs de messages protocolaires (par exemple du type Tekelec GSM/T ou MGTS (marques déposées)) produisent des flux massifs de messages correspondant à un trafic fictif représentatif du comportement de milliers d'abonnés. Les observations associées sont essentielles pour au moins deux raisons :
- réalisées sur plate-forme, elles permettent de déterminer les limites auxquelles un élément de réseau particulier (par exemple un MSC ou un BSC) présente un comportement préjudiciable à la qualité de service pour un réseau opérationnel dans lequel cet élément serait intégré ;
- réalisées dans le réseau cellulaire lui-même, elles permettent de déterminer les faiblesses d'une association d'éléments de réseau bien avant qu'elles ne soient mises au jour par le trafic réel (avec des conséquences fâcheuses pour le service rendu aux clients).

Ainsi, le système de l'invention ne nécessite aucun déplacement de techniciens sur sites, que ce soit pour brancher les analyseurs de protocole ou pour effectuer la centralisation des informations de signalisation enregistrées. Notamment, on évite le lourd transfert de disquettes existant dans les solutions connues précitées.

Un autre avantage de l'invention est qu'elle permet une surveillance du réseau sur un ou plusieurs niveaux selon que l'on surveille des interfaces d'un seul ou de plusieurs types (par exemple uniquement de type Abis ou bien des quatre types Abis, A , "CCITT n° 7 téléphonique" et MAP). Chaque niveau d'interface fournit des informations d'une nature distincte.

Ainsi, les informations de signalisation prélevées au niveau des interfaces Abis fournissent notamment une information sur l'état des liaisons radio montantes et descendantes, sur les handovers et sur le déroulement des communications.

Celles prélevées au niveau des interfaces A portent notamment sur le traitement d'appel dans son ensemble (trafic, échecs d'appels, etc) et sur la mobilité (handovers).

Celles prélevées au niveau des interfaces "CCITT n° 7 téléphonique" renseignent principalement sur l'interface avec le réseau public fixe (RTCP), et l'écoulement des communications.

Enfin, celles prélevées au niveau des interfaces MAP fournissent une information notamment sur les mouvements des mobiles, les renvois effectués, etc...

Préférentiellement, lesdits moyens fixes d'enregistrement et d'horodatage comprennent :
- au moins un groupe d'au moins un analyseur de protocole, chaque analyseur de protocole d'un même groupe étant branché sur le réseau cellulaire au niveau d'au moins une interface distincte d'un même type, de façon à enregistrer et horodater des informations de signalisation transitant par ladite interface distincte,
et lesdits moyens fixes de centralisation comprennent :
- au moins une base de données de signalisation, chaque base de données de signalisation étant associée à un groupe distinct d'au moins un analyseur de protocole, et donc également à un type donné d'interfaces pouvant être observées;
- des moyens de transmission des informations de signalisation enregistrées et horodatées par chaque analyseur de protocole, vers la base de données de signalisation associée au groupe auquel appartient ledit analyseur de protocole.

De façon avantageuse, lesdits moyens de transmission des informations de signalisation enregistrées et horodatées par chaque analyseur de protocole comprennent un réseau indépendant de transmission de données.

Le réseau indépendant de transmission de données est par exemple un réseau interne (de type LAN (Local Area Network) ou WAN (Wide Area Network)) propre à l'opérateur.

Avantageusement, lesdits moyens fixes d'enregistrement et d'horodatage comprennent également des moyens de commande à distance de chaque analyseur de protocole.

Ainsi, en contrôlant à distance les analyseurs, on évite les déplacements des techniciens.

De façon préférentielle, lesdits moyens d'association d'informations de localisation auxdites informations de signalisation comprennent :
- une base de données de localisation ;
- au moins un équipement mobile de contrôle comprenant notamment :
   * un dispositif de localisation et d'horodatage délivrant des informations de localisation horodatées, et
   * une desdites stations mobiles, dite station mobile de contrôle,
   ladite station mobile de contrôle fonctionnant en mode transmission de données et coopérant avec ledit dispositif de localisation de façon que lesdites informations de localisation horodatées soient transmises, notamment via une communication établie par ladite station mobile de contrôle sur ledit réseau cellulaire, vers ladite base de données de localisation,
   des informations de signalisation relatives à ladite communication étant enregistrées et horodatées par au moins un desdits analyseurs de protocole et transmises vers et stockées dans la base de données de signalisation associée au groupe auquel appartient ledit analyseur de protocole ;
   - des moyens de synchronisation de chaque base de données de signalisation avec ladite base de données de localisation, de façon qu'au moins certaines desdites informations de signalisation horodatées stockées dans chaque base de données de signalisation soient associées à des informations de localisation horodatées stockées dans ladite base de données de localisation.

Ainsi, on crée un troisième type d'évènements générateurs de messages protocolaires, à savoir des communications lancées à dessein par des opérateurs parcourant des itinéraires déterminés. On rappelle que les deux autres types d'évènements générateurs de messages protocolaires, déjà cités ci-dessus, sont les communications et les mouvements des abonnés réels, ainsi que les scénarios programmés dans des générateurs de messages protocolaires.

Il est important de noter que la station mobile de contrôle de l'invention est tout à fait classique. Par conséquent, son coût est très inférieur (dans un rapport d'environ vingt) à celui d'un mobile de trace spécialisé tel que celui nécessité par la première technique connue précitée (dite des "vigies").

Avantageusement, ledit dispositif de localisation et d'horodatage est un dispositif de repérage par satellites du type GPS simple ou différentiel.

Ainsi, on dispose d'une localisation très précise (à environ 100 m près) en longitude et latitude (cas du GPS simple), et éventuellement également en hauteur (cas du GPS différentiel). Par ailleurs, on dispose également de tops horaires très précis pour horodater les informations de localisation.

De façon avantageuse, ledit dispositif comprend également une station de localisation fixe, lesdites informations de localisation transmises par ladite station mobile de contrôle étant combinées à un flux de données provenant de ladite station de localisation fixe avant d'être stockées dans ladite base de données de localisation, de façon à augmenter la précision de la localisation.

Ainsi, on améliore la précision de la localisation, par exemple jusqu'à 16 m près.

Avantageusement, chaque équipement mobile de contrôle comprend également des moyens de formatage desdites informations de localisation horodatées délivrées par le dispositif de localisation et d'horodatage, de façon à pouvoir les introduire dans des trames transmises par ladite station mobile de contrôle.

Ainsi, dans le cas le plus simple, les informations de localisation générées par le dispositif de localisation sont directement placées dans des trames émises par la station mobile de contrôle. C'est seulement si ce placement direct n'est pas possible que l'on utilise les moyens de formatage des informations de localisation.

De façon avantageuse, ledit système comprend également des moyens de traitement et de présentation des informations de signalisation horodatées et de leurs informations de localisation horodatées associées.

Ce post-traitement permet de présenter aux ingénieurs en charge de l'ingénierie, du paramétrage, de l'exploitation ou de la maintenance une situation réelle du fonctionnement du réseau sur le terrain. Ceci leur permet de prendre les mesures éventuellement nécessaires pour corriger un défaut de qualité sur les segments radio analysés. D'une façon générale, les résultats visualisés doivent être clairs et facilement interprétables. La présentation peut notamment se faire sous forme de cartes, de graphes, de tableaux, de listes, etc.

Dans un mode de réalisation préférentiel de l'invention, ledit réseau cellulaire est du type GSM.

L'invention concerne également un procédé correspondant de contrôle d'un réseau cellulaire de radiocommunication, ledit procédé étant caractérisé en ce qu'il comprend une étape d'enregistrement, d'horodatage et de centralisation des informations de signalisation transitant par au moins une interface d'un desdits types d'interfaces pouvant être observées, consistant à :
- enregistrer et horodater, à l'aide d'un ou plusieurs analyseurs de protocole fixes, des informations de signalisation transitant sur une ou plusieurs interfaces d'un même ou de plusieurs desdits types d'interfaces pouvant être observées ;
- transmettre, via un réseau indépendant de transmission de données, les informations de signalisation enregistrées et horodatées vers une ou plusieurs bases de données de signalisation chacune associée à un desdits types d'interfaces pouvant être observées ;
- associer des informations de localisation auxdites informations de signalisation, de façon à localiser précisément des segments dudit réseau cellulaire situés en aval de chaque interface sur laquelle des informations de signalisation sont enregistrées.

De façon préférentielle, ladite étape d'association d'informations de localisation aux informations de signalisation consiste à :
- transmettre à une base de données de localisation, notamment via une communication établie par une station mobile, dite de contrôle, sur ledit réseau cellulaire, des informations de localisation horodatées fournies par un dispositif de localisation et d'horodatage ;
   des informations de signalisation relatives à ladite communication établie par la station mobile de contrôle étant enregistrées par au moins un desdits analyseurs de protocole, et transmises vers puis stockées dans la base de données de signalisation associée au groupe auquel appartient ledit analyseur de protocole ;
- synchroniser chaque base de données de signalisation avec ladite base de données de localisation, de façon qu'au moins certaines des informations de signalisation horodatées stockées dans chaque base de données de signalisation soient associées à des informations de localisation horodatées stockées dans la base de données de localisation.

D'autres caractéristiques et avantages de l'invention apparaîtront à la lecture de la description suivante de deux modes de réalisation préférentiels de l'invention, donnés à titre d'exemples indicatifs et non limitatifs, et des dessins annexés, dans lesquels :
- la figure 1 présente, à titre de rappel, un schéma simplifié de l'architecture générale d'un réseau de radiocommunication cellulaire ;
- la figure 2 présente un schéma simplifié d'un premier mode de réalisation du système selon l'invention permettant le contrôle d'un réseau du type présenté sur la figure 1 ;
- la figure 3 présente un schéma simplifié d'un second mode de réalisation du système selon l'invention permettant le contrôle d'un réseau du type présenté sur la figure 1 ;
- la figure 4 présente un schéma simplifié d'un mode de réalisation particulier d'un équipement mobile de contrôle selon l'invention également compris dans le second mode de réalisation du système de l'invention présenté sur la figure 3 ; et
- la figure 5 présente un organigramme simplifié d'un mode de réalisation particulier du procédé selon l'invention permettant le contrôle d'un réseau du type présenté sur la figure 1.

L'invention concerne donc un système et un procédé de contrôle d'un réseau de radiocommunication cellulaire. L'architecture générale d'un tel réseau de radiocommunication cellulaire a déjà été rappelée ci-dessus, en relation avec la figure 1.

Dans la suite de la description, on discute uniquement d'un réseau cellulaire de type GSM. Il est clair cependant que l'invention n'est pas limitée à ce type particulier de réseau mais s'applique plus généralement à tous les réseaux possédant une architecture sensiblement identique à celle présentée sur la figure 1.

On présente ci-dessous deux modes de réalisation distincts du système selon l'invention permettant le contrôle d'un réseau du type présenté sur la figure 1.

Dans le premier mode de réalisation, présenté en relation avec la figure 2, le principe général de l'invention consiste à prévoir que le système comprend :
- des moyens fixes d'enregistrement et d'horodatage d'informations de signalisation transitant par au moins une interface d'un des types d'interfaces Abis, A, "CCITT n° 7 téléphonique" et MAP ; et
- des moyens fixes de centralisation des informations de signalisation enregistrées et horodatées.

Dans cet exemple particulier, ces moyens fixes d'enregistrement et d'horodatage comprennent un groupe 21 d'analyseurs de protocole 22₁, 22₂, 22₃, et les moyens fixes de centralisation comprennent :
- une base de données de signalisation 24 associée au groupe 21 d'analyseurs de protocole 22₁, 22₂, 22₃ ;
- des moyens 25 de transmission des informations de signalisation enregistrées et horodatées par chaque analyseur de protocole 22₁, 22₂, 22₃, vers la base de données de signalisation 24.

Les analyseurs de protocole 22₁, 22₂, 22₃ sont par exemple des modèles référencés K1103 (marque déposée) chez SIEMENS. Ces modèles K1103 sont des micro-ordinateurs de type PC auxquels ont été ajoutés des instruments d'acquisition de trames et d'analyse de différents protocoles. Ils permettent de scruter l'interface, de type Abis, A, "CCITT n° 7 téléphonique" ou encore MAP, sur laquelle ils sont branchés, afin d'en extraire les messages de signalisation. Ils permettent également d'horodater les messages extraits grâce à une horloge asservie à une référence précise.

Il est à noter que ce modèle d'analyseur de protocole, lorsqu'il est utilisé au niveau des interfaces A, permet de scruter jusqu'à deux BSC simultanément. Ainsi, dans l'exemple de la figure 2, chacun des trois analyseurs de protocole 22₁, 22₂, 22₃ est branchés sur le réseau cellulaire au niveau de deux interfaces A distinctes 23₁, 23₂, 23₃, 23₄, 23₅, 23₆. On notera qu'au niveau des interfaces A, pour couvrir une région aussi étendue que Paris et sa proche banlieue, il peut y avoir jusqu'à une dizaine d'analyseurs de protocole en activité.

Des appareils plus performants permettent d'observer chacun plusieurs dizaines d'interfaces. Dans ce cas, le micro-ordinateurs de type PC précité est remplacé par une station de travail plus puissante.

On peut également prévoir un pilotage complet, à distance, des analyseurs de protocoles 22₁, 22₂, 22₃. Pour cela, on utilise par exemple un logiciel de communication permettant de prendre la main à distance sur un autre poste, à savoir un analyseur de protocole dans le cas présent. Ainsi, dans le cas présent, les analyseurs de protocole 22₁, 22₂, 22₃ peuvent être programmés pour envoyer à intervalles réguliers des fichiers de mesures, via les moyens 25 de transmission, à destination de la base de données de signalisation 24.

Les moyens 25 de transmission des informations de signalisation peuvent par exemple comprendre un réseau indépendant de transmission de données, tel qu'un réseau interne de l'opérateur du réseau cellulaire contrôlé. Ce réseau interne 25, par exemple un réseau LAN ou WAN du type jeton circulant (Token Ring en langue anglaise), doit permettre de transmettre des fichiers de manière rapide et sûre.

La base de données de signalisation 24 est par exemple supportée par un serveur accessible, via le réseau interne 25, par tout poste autorisé. Ce serveur est un micro-ordinateur puissant ou une station de travail, avec un espace de stockage important. Il récupère les données extraites d'un pré-traitement sur chaque analyseur de protocole et les stocke dans la base de données 24.

Dans l'exemple présenté, deux micro-ordinateurs locaux 26, 27 supplémentaires, également reliés au réseau interne 25. L'un 26 permet d'accéder aux données de signalisation horodatées qui sont stockées sur la base de données de signalisation 24. L'autre 27 permet d'exécuter des programmes d'interprétation, de mise en forme ou d'alarme utilisant ces données de signalisation horodatées.

Il est clair cependant que dans le cas d'un faible volume de données de signalisation à traiter, il est tout à fait possible de n'utiliser qu'un seul micro-ordinateur local pour gérer la base de données de signalisation et pour exécuter les programmes d'exploitation des données.

Dans l'exemple présenté ci-dessus en relation avec la figure 2, le système de l'invention réalise un contrôle du réseau au niveau des interfaces A. Il est clair que l'homme du métier saura adapter cet exemple à la mise en oeuvre d'un contrôle au niveau des interfaces Abis, "CCITT n° 7 téléphonique" ou MAP, en prévoyant pour chaque niveau de contrôle un groupe distinct d'analyseurs de protocole ainsi qu'une base distincte de données de signalisation.

Dans ce cas, un même réseau interne 25 peut être utilisé pour relier les différents groupes d'analyseurs de protocole à leur base de données de signalisation associée respective. De façon alternative, on peut également prévoir un réseau interne distinct pour chaque type d'interface.

De plus, il est tout à fait possible de combiner l'ensemble ou seulement certains de ces quatre niveaux de contrôle. Ainsi, dans le cas le plus complet, le système de l'invention permet un contrôle du réseau par analyse d'interfaces de quatre types, à savoir Abis, A, "CCITT n° 7 téléphonique" et MAP.

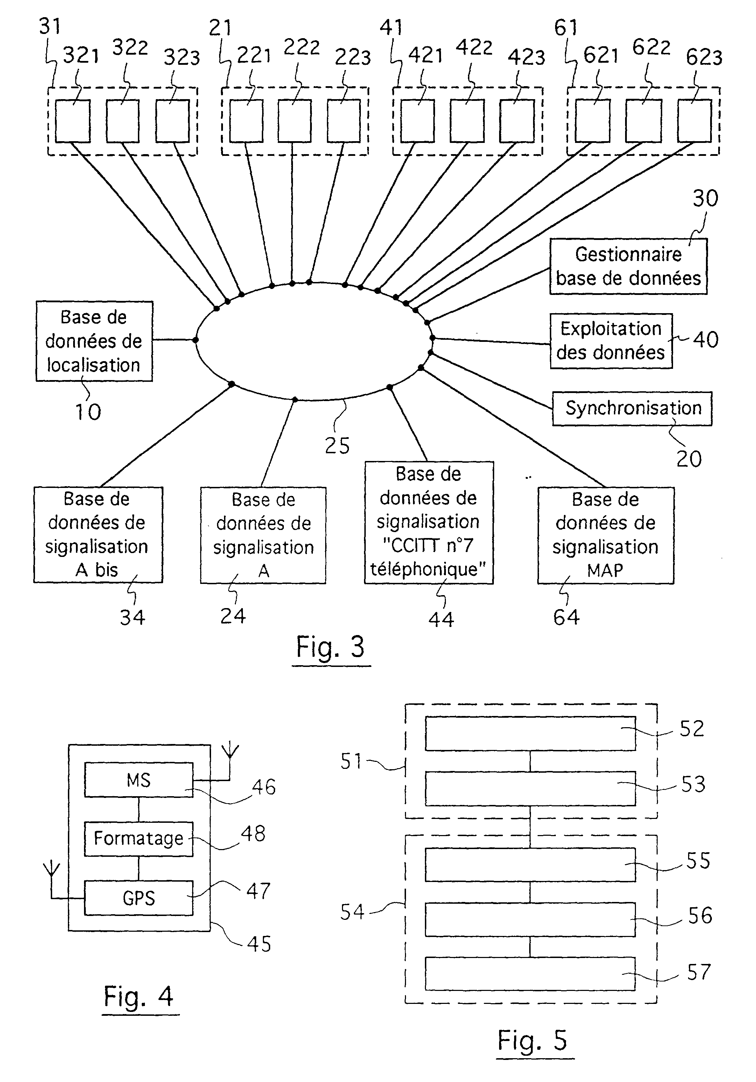

Dans le second mode de réalisation, présenté maintenant en relation avec les figures 3 et 4, on prévoit, en plus des moyens précités pour le premier mode de réalisation, que le système comprend en outre des moyens d'association d'informations de localisation aux informations de signalisation. Le but est ici de localiser précisément des segments du réseau cellulaire situés en aval de chaque interface sur laquelle des informations de signalisation sont enregistrées.

Sur la figure 3, qui présente un schéma simplifié de ce second mode de réalisation du système selon l'invention, les moyens fixes d'enregistrement et d'horodatage et ceux de centralisation comprennent :
- certains éléments de la figure 2, qui permettent un contrôle du réseau par surveillance des interfaces A, à savoir le groupe 21 d'analyseurs de protocole 22₁, 22₂, 22₃, la base de données de signalisation 24 associée et le réseau interne 25 de transmission de données ; et
- d'autres éléments, qui permettent un contrôle du réseau par surveillance des interfaces Abis, "CCITT n° 7 téléphonique" et MAP, à savoir respectivement trois autres groupes 31, 41, 61 d'analyseurs de protocole 32₁, 32₂, 32₃, 42₁, 42₂, 42₃, 62₁, 62₂, 62₃ associés chacun à une base de données de signalisation 34, 44, 64 distincte.

En d'autres termes, dans l'exemple présenté ici, le système permet un contrôle du réseau par surveillance des quatre types d'interfaces A, Abis, "CCITT n° 7 téléphonique" et MAP.

Dans ce second mode de réalisation du système selon l'invention, les moyens d'association d'informations de localisation aux informations de signalisation comprennent :
- une base de données de localisation 10 ;
- au moins un équipement mobile de contrôle 45 (présenté en détail ci-dessous, en relation avec la figure 4), permettant de transmettre à la base de données de localisation 10 des informations de localisation horodatées en rapport avec des données de signalisation enregistrées et horodatées par les analyseurs de protocoles ;
- des moyens 20 de synchronisation de chaque base de données de signalisation 24, 34, 44, 64 avec la base de données de localisation 10, de façon qu'au moins certaines des informations de signalisation horodatées qui sont stockées dans chaque base de données de signalisation soient associées à des informations de localisation horodatées qui sont stockées dans la base de données de localisation.

La base de données de localisation 10 est par exemple supportée par un serveur accessible via le réseau interne 25.

Dans l'exemple présenté, deux micro-ordinateurs locaux 30, 40 supplémentaires sont également reliés au réseau interne 25. L'un 30 est un gestionnaire de bases de données, qui permet d'accéder aux données de signalisation stockées sur les bases de données de signalisation 24, 34, 44, 64 et aux données de localisation stockées sur la base de données de localisation 10. L'autre 40 permet d'exécuter des programmes d'interprétation, de mise en forme ou d'alarme utilisant la combinaison des données de signalisation et des données de localisation.

Cette combinaison des données de signalisation et des données de localisation permet de reporter des séquences de protocole (c'est-à-dire des informations de signalisation) et leur traduction en clair (c'est-à-dire en comportement du réseau) sur une carte géographique. Ainsi, on peut obtenir différentes cartes telles que :
- une carte "Meilleur Serveur", qui permet de visualiser rapidement si la couverture correspond à celle attendue ;
- une carte de couverture, qui fournit les trous de couverture ;
- une carte de qualité, qui donne un aperçu global de la qualité sur la zone ;
- une carte des résurgences, qui permet d'identifier les éventuelles résurgences ;
- une carte des handovers, qui permet de repérer les différents types d'handovers ;
- etc.

Les moyens 20 de synchronisation se présentent par exemple sous la forme de cartes ou de boîtiers standard.

L'horodatage des informations de localisations et des informations de signalisation est à la base de la synchronisation (ou chaînage) des diverses bases de données (de localisation 10 et de signalisation 24, 34, 44, 64). Il existe des raffinements liés aux temps de traitement par les différents éléments de réseau qui introduisent un délai entre le message protocolaire sur une interface (par exemple Abis) et son correspondant sur les interfaces suivantes (par exemple A puis "CCITT n° 7 téléphonique"). La connaissance de ces délais est en elle-même importante pour modéliser et contrôler le fonctionnement du réseau cellulaire.

Dans le mode de réalisation particulier présenté sur la figure 4, l'équipement mobile de contrôle 45 de l'invention comprend un dispositif de localisation et d'horodatage 47 ainsi qu'une station mobile de contrôle 46.

Le dispositif de localisation et d'horodatage 47 est par exemple un dispositif de repérage par satellites du type GPS, simple ou différentiel. On peut également prévoir une station de localisation fixe (non représentée). Dans ce cas, les informations de localisation transmises par la station mobile de contrôle 46 sont combinées à un flux de données provenant de la station de localisation fixe avant d'être stockées dans la base de données de localisation 10. Ainsi, on augmente la précision de la localisation.

La station mobile de contrôle 46 est une station mobile tout à fait classique. Elle fonctionne en mode transmission de données.

On présente maintenant le fonctionnement de ce second mode de réalisation du système de l'invention.

Chaque opérateur muni d'un équipement mobile de contrôle 45 parcourt un itinéraire prédéterminé. En temps réel, le dispositif GPS 47 (compris dans l'équipement mobile 45) permet de générer des informations de localisation horodatées, grâce à la réception de données GPS (y inclus des tops horaires précis) émises par une constellation de satellites.

Ces informations de localisation horodatées sont passées dans le flux de données que la station mobile de contrôle 46 (comprise dans l'équipement mobile 45) transmet en mode "données" (par exemple à 9600 bits/s), via une communication à travers le réseau cellulaire jusqu'à la base de données de localisation 10.

Dans cette base de données de localisation 10, l'horodatage GPS est extrait, de façon à disposer d'informations de localisation précises et horodatées. Il est à noter que pour une localisation encore plus précise, on procède en outre à une comparaison avec une référence GPS fixe (GPS différentiel).

Par ailleurs, grâce à un ou plusieurs groupes 21, 31, 41, 61 d'analyseurs de protocole 32₁, 32₂, 32₃, 42₁, 42₂, 42₃, 62₁, 62₂, 62₃, on capture à des interfaces choisies de façon adéquate des informations de signalisation correspondant au flux de données précité, à savoir celui que la station mobile de contrôle 46 transmet à travers le réseau cellulaire vers la base de données de localisation 10. D'une façon générale, les interfaces sont choisies en fonction du trajet prédéterminé que parcourt l'opérateur. Chaque analyseur de protocole dispose d'une horloge asservie à une référence précise (référence GPS, réference de France Inter (162 kHz), référence allemande DCF (77.5 kHz), référence anglaise MSF (60 kHz), etc). Ainsi, ces informations de signalisation peuvent être horodatées avant d'être stockées dans une des bases de données de signalisation 24, 34, 44, 64.

Du fait que les informations de localisation comme les informations de signalisation sont horodatées, il est possible de synchroniser ces différentes bases de données de localisation 10 et de signalisation 24, 34, 44, 64. Ceci permet de positionner des informations de signalisation (et leur traduction sous forme d'évènements téléphoniques) sur une carte géographique.

Eventuellement, l'équipement mobile de contrôle 45 de l'invention comprend également des moyens 48 de formatage des informations de localisation horodatées délivrées par le dispositif de localisation 47, de façon à pouvoir les introduire dans des trames transmises par la station mobile de contrôle 46. Il est clair que ces moyens 48 de formatage ne sont nécessaires que lorsque les informations de localisation horodatées ne peuvent par être directement introduites dans des trames transmises par la station mobile de contrôle 46.

Les deux ou trois entités 46, 47, 48 de l'équipement mobile de contrôle peuvent être regroupées dans un même boîtier ou être placées dans trois boîtiers différents.

Il est clair que le principe de l'invention sur lequel repose le second mode de réalisation, à savoir combiner des informations de localisation horodatées remontées via une communication GSM à des informations de signalisation elles aussi horodatées, peut être appliqué à un contrôle sur plusieurs niveaux d'interfaces (par exemple quatre niveaux (Abis, A "CCITT n° 7 téléphonique" et MAP) dans le cas présenté ci-dessus), comme à un contrôle sur seulement un, deux ou trois niveaux d'interfaces.

L'invention concerne également un procédé de contrôle d'un réseau cellulaire de radiocommunication. Lorsqu'il est mis en oeuvre dans le système présenté ci-dessus, et comme présenté sur l'organigramme simplifié de la figure 5, ce procédé comprend par exemple les deux étapes suivantes :
- une étape 51 d'enregistrement, d'horodatage et de centralisation des informations de signalisation transitant par au moins une interface d'un des types d'interfaces Abis, A, "CCITT n° 7 téléphonique" et MAP ; et
- une étape 54 d'association d'informations de localisation aux informations de signalisation.

L'étape 51 d'enregistrement, d'horodatage et de centralisation des informations de signalisation consiste à :
- enregistrer et horodater (52), à l'aide d'un ou plusieurs analyseurs de protocole fixes 22₁, 22₂, 22₃, 32₁, 32₂, 32₃, 42₁, 42₂, 42₃, 62₁, 62₂, 62₃ des informations de signalisation transitant sur une ou plusieurs interfaces d'un même ou de plusieurs des types d'interfaces Abis, A, "CCITT n° 7 téléphonique" et MAP ;
- transmettre (53), via un réseau indépendant de transmission de données 25, les informations de signalisation enregistrées et horodatées vers une ou plusieurs bases de données de signalisation 24, 34, 44, 64 chacune associée à un des types d'interfaces Abis, A, "CCITT n° 7 téléphonique" et MAP.

L'étape 54 d'association d'informations de localisation aux informations de signalisation consiste par exemple à :
- transmettre (55) à une base de données de localisation 10, notamment via une communication établie par une station mobile de contrôle 46, sur le réseau cellulaire, des informations de localisation horodatées fournies par un dispositif de localisation et d'horodatage 47,
- enregistrer et horodater, avec au moins un analyseur de protocole, des informations de signalisation relatives à cette communication établie par la station mobile de contrôle, puis les transmettre (56) et les stocker dans la base de données de signalisation 24, 34, 44, 64 associée au groupe 21, 31, 41, 61 auquel appartient cet analyseur de protocole ;
- synchroniser (57), en se basant sur l'horodatage des différentes informations, chaque base de données de signalisation 24, 34, 44, 64 avec la base de données de localisation 10, de façon qu'au moins certaines des informations de signalisation horodatées stockées dans chaque base de données de signalisation 24, 34, 44, 64 soient associées à des informations de localisation horodatées stockées dans la base de données de localisation 10.

## Revendications

1. Système de contrôle d'un réseau cellulaire de radiocommunication avec des stations mobiles (MS), ledit réseau cellulaire comprenant au moins un commutateur du service mobile (MSC) permettant l'interconnexion du réseau cellulaire avec un réseau téléphonique fixe (RTCP), au moins un contrôleur de station de base (BSC) étant relié à chaque commutateur du service mobile (MSC), au moins une station de base (BTS) étant reliée à chaque contrôleur de station de base (BSC), chaque station de base (BTS) étant associée à une cellule géographique, ledit réseau cellulaire présentant divers types d'interfaces pouvant être observées,
ledit système de contrôle étant **caractérisé en ce qu'**il comprend :
- des moyens fixes d'enregistrement et d'horodatage (22₁, 22₂, 22₃, 32₁, 32₂, 32₃, 42₁, 42₂, 42₃, 62₁, 62₂, 62₃) d'informations de signalisation transitant par au moins une interface observée de façon à obtenir des informations de signalisation enregistrées et horodatées ;
- des moyens fixes de centralisation (24, 34, 44, 64, 25) desdites informations de signalisation enregistrées et horodatées ;
- des moyens de génération et d'horodatage d'informations de localisation qui sont en rapport avec lesdites informations de signalisation enregistrées et horodatées de façon à obtenir des informations de localisation horodatées ;
- des moyens (45, 10, 20) d'association desdites informations de localisation horodatées auxdites informations de signalisation enregistrées et horodatées, de façon à localiser précisément des segments dudit réseau cellulaire situés en aval de chaque interface sur laquelle des informations de signalisation sont enregistrées.

2. Système selon la revendication 1, **caractérisé en ce que** lesdits divers types d'interfaces pouvant être observées comprennent :
- les interfaces Abis, situées chacune entre une station de base (BTS) et le contrôleur de station de base (BSC) correspondant ;
- les interfaces A, situées chacune entre un contrôleur de station de base (BSC) et le commutateur du service mobile (MSC) correspondant ;
- les interfaces "CCITT n° 7 téléphonique" situées chacune entre :
* deux commutateurs du service mobile (MSC), ou
* un commutateur du service mobile (MSC) et le réseau téléphonique fixe (RTCP) correspondant, ou
* un commutateur du service mobile (MSC) et un centre de transit ;
- les interfaces MAP, situées chacune entre un commutateur du service mobile (MSC) et une base de données spécialisée (HLR, VLR, AuC) dudit réseau cellulaire.

3. Système selon la revendication 1, **caractérisé en ce que** lesdits moyens fixes d'enregistrement et d'horodatage comprennent :
- au moins un groupe (21, 31, 41, 61) d'au moins un analyseur de protocole (22₁, 22₂, 22₃, 32₁, 32₂, 32₃, 42₁, 42₂, 42₃, 62₁, 62₂, 62₃), chaque analyseur de protocole d'un même groupe étant branché sur le réseau cellulaire au niveau d'au moins une interface distincte d'un même type, de façon à enregistrer et horodater des informations de signalisation transitant par ladite interface distincte,
et **en ce que** lesdits moyens fixes de centralisation comprennent :
- au moins une base de données de signalisation (24, 34, 44, 64), chaque base de données de signalisation étant associée à un groupe distinct d'au moins un analyseur de protocole, et donc également à un type donné d'interfaces pouvant être observées ;
- des moyens (25) de transmission des informations de signalisation enregistrées et horodatées par chaque analyseur de protocole, vers la base de données de signalisation associée au groupe auquel appartient ledit analyseur de protocole.

4. Système selon la revendication 3, **caractérisé en ce que** lesdits moyens de transmission des informations de signalisation enregistrées et horodatées par chaque analyseur de protocole comprennent un réseau indépendant de transmission de données (25).

5. Système selon la revendication 1, **caractérisé en ce que** lesdits moyens fixes d'enregistrement et d'horodatage comprennent également des moyens de commande à distance de chaque analyseur de protocole.

6. Système selon la revendication 1, **caractérisé en ce que** lesdits moyens d'association d'informations de localisation auxdites informations de signalisation comprennent :
- une base de données de localisation (10) ;
- au moins un équipement mobile de contrôle (45) comprenant notamment :
* un dispositif de localisation et d'horodatage (47) délivrant des informations de localisation horodatées, et
* une desdites stations mobiles, dite station mobile de contrôle (46),
ladite station mobile de contrôle (46) fonctionnant en mode transmission de données et coopérant avec ledit dispositif de localisation (47) de façon que lesdites informations de localisation horodatées soient transmises, notamment via une communication établie par ladite station mobile de contrôle sur ledit réseau cellulaire, vers ladite base de données de localisation (10),
des informations de signalisation relatives à ladite communication étant enregistrées et horodatées par au moins un desdits analyseurs de protocole, et transmises vers et stockées dans la base de données de signalisation associée au groupe auquel appartient ledit analyseur de protocole ;
- des moyens (20) de synchronisation de chaque base de données de signalisation avec ladite base de données de localisation, de façon qu'au moins certaines desdites informations de signalisation horodatées stockées dans chaque base de données de signalisation soient associées à des informations de localisation horodatées stockées dans ladite base de données de localisation.

7. Système selon la revendication 6, **caractérisé en ce que** ledit dispositif de localisation et d'horodatage (47) est un dispositif de repérage par satellites du type GPS simple ou différentiel.

8. Système selon la revendication 7, **caractérisé en ce qu'**il comprend également une station de localisation fixe, lesdites informations de localisation horodatées transmises par ladite station mobile de contrôle étant combinées à un flux de données provenant de ladite station de localisation fixe avant d'être stockées dans ladite base de données de localisation, de façon à augmenter la précision de la localisation.

9. Système selon la revendication 6, **caractérisé en ce que** chaque équipement mobile de contrôle (45) comprend également des moyens (48) de formatage desdites informations de localisation horodatées délivrées par le dispositif de localisation et d'horodatage (47), de façon à pouvoir les introduire dans des trames transmises par ladite station mobile de contrôle (46).

10. Système selon la revendication 6, **caractérisé en ce qu'**il comprend également des moyens (40) de traitement et de présentation des informations de signalisation horodatées et de leurs informations de localisation horodatées associées.

11. Système selon la revendication 1, **caractérisé en ce que** ledit réseau cellulaire est du type GSM.

12. Procédé de contrôle d'un réseau cellulaire de radiocommunication avec des stations mobiles (MS), ledit réseau cellulaire comprenant au moins un commutateur du service mobile (MSC) permettant l'interconnexion du réseau cellulaire avec un réseau téléphonique fixe (RTCP), au moins un contrôleur de station de base (BSC) étant relié à chaque commutateur du service mobile (MSC), au moins une station de base (BTS) étant reliée à chaque contrôleur de station de base (BSC), chaque station de base (BTS) étant associée à une cellule géographique, ledit réseau cellulaire présentant divers types d'interfaces pouvant être observées,
ledit procédé étant **caractérisé en ce qu'**il comprend :
- une étape (51) d'enregistrement et d'horodatage d'informations de signalisation transitant par au moins une interface observée, de façon à obtenir des informations de signalisation enregistrées et horodatées ;
- une étape de centralisation desdites informations de signalisation enregistrées et horodatées ;
- une étape de génération et d'horodatage d'informations de localisation qui sont en rapport avec lesdites informations de signalisation enregistrées et horodatées, de façon à obtenir des informations de localisation horodatées ;
- une étape (54) d'association desdites informations de localisation horodatées auxdites informations de signalisation enregistrées et horodatées, de façon à localiser précisément des segments dudit réseau cellulaire situés en aval de chaque interface sur laquelle des informations de signalisation sont enregistrées.

13. Procédé selon la revendication 12, **caractérisé en ce que** ladite étape (51) d'enregistrement, d'horodatage et de centralisation des informations de signalisation consiste à :
- enregistrer et horodater (52), à l'aide d'un ou plusieurs analyseurs de protocole fixes, des informations de signalisation transitant sur une ou plusieurs interfaces d'un même ou de plusieurs desdits types d'interfaces pouvant être observées ;
- transmettre (53), via un réseau indépendant de transmission de données, les informations de signalisation enregistrées et horodatées vers une ou plusieurs bases de données de signalisation chacune associée à un desdits types d'interfaces pouvant être observées.

14. Procédé selon l'une quelconque des revendications 12 et 13, **caractérisé en ce que** lesdits divers types d'interfaces pouvant être observées comprennent :
- les interfaces Abis, situées chacune entre une station de base (BTS) et le contrôleur de station de base (BSC) correspondant ;
- les interfaces A, situées chacune entre un contrôleur de station de base (BSC) et le commutateur du service mobile (MSC) correspondant ;
- les interfaces "CCITT n° 7 téléphonique" , situées chacune entre :
* deux commutateurs du service mobile (MSC), ou
* un commutateur du service mobile (MSC) et le réseau téléphonique fixe (RTCP) correspondant, ou
* un commutateur du service mobile (MSC) et un centre de transit ;
- les interfaces MAP, situées chacune entre un commutateur du service mobile (MSC) et une base de données spécialisée (HLR, VLR, AuC) dudit réseau cellulaire.

15. Procédé selon l'une quelconque des revendications 12 à 14, **caractérisé en ce que** ladite étape (54) d'association d'informations de localisation aux informations de signalisation consiste à :
- transmettre (55) à une base de données de localisation, notamment via une communication établie par une station mobile (MS), dite de contrôle, sur ledit réseau cellulaire, des informations de localisation horodatées fournies par un dispositif de localisation et d'horodatage ;
des informations de signalisation relatives à ladite communication établie par la station mobile de contrôle étant enregistrées et horodatées par au moins un desdits analyseurs de protocole, et transmises vers puis stockées dans (56) la base de données de signalisation associée au groupe auquel appartient ledit analyseur de protocole ;
- synchroniser (57) chaque base de données de signalisation avec ladite base de données de localisation, de façon qu'au moins certaines des informations de signalisation horodatées stockées dans chaque base de données de signalisation soient associées à des informations de localisation horodatées stockées dans la base de données de localisation.

## Claims

1. System for controlling a cellular radiocommunication network with mobile stations (MS), the said cellular network comprising at least one mobile switching centre (MSC), making it possible to interconnect the cellular network with a public switched telephone network (PSTN), at least one base station controller (BSC) being linked to each mobile switching centre (MSC), at least one base station (BTS) being linked to each base station controller (BSC), each base station (BTS) being associated with a geographical cell, the said cellular network having various types of interface which can be observed, the said control system being **characterized in that** it comprises:
- fixed resources for recording and date-time stamping (22₁, 22₂, 22₃, 32₁, 32₂, 32₃, 42₁, 42₂, 42₃, 62₁, 62₂, 62₃) signalling information passing through at least one observed interface, in such a way as to obtain recorded and date-time stamped signalling information;
- fixed resources (24, 34, 44, 64, 25) for centralizing the said recorded and date-time stamped signalling information;
- resources for generating and date-time stamping location information which is related to the said recorded and date-time stamped signalling information, in such a way as to obtain date-time stamped location information;
- resources (45H, 10, 20) for associating the said date-time stamped location information with the said recorded and date-time stamped signalling information, in such a way as to locate precisely those segments of the said cellular network which are situated downstream of each interface on which signalling information is recorded.

2. System according to Claim 1, **characterized in that** the said various types of interface which can be observed comprise:
- interfaces Abis, each situated between a base station (BTS) and the corresponding base station controller (BSC);
- interfaces A, each situated between a base station controller (BSC) and the corresponding mobile switching centre (MSC);
- "telephone CCITT 7" interfaces, each situated between:
* two mobile switching centres (MSC), or
* one mobile switching centre (MSC) and the corresponding public switched telephone network (PSTN), or
* one mobile switching centre (MSC) and a transit exchange;
- MAP interfaces, each situated between a mobile switching centre (MSC) and a specialized database (HLR, VLR, AuC) of the said cellular network.

3. System according to Claim 1, **characterized in that** the said fixed resources for recording and date-time stamping comprise:
- at least one group (21, 31, 41, 61) of at least one protocol analyser (22₁, 22₂, 22₃, 32₁, 32₂, 32₃, 42₁, 42₂, 42₃, 62₁, 62₂, 62₃), each protocol analyser of a single group being connected to the cellular network by at least one distinct interface of a single type, in such a way as to record and date-time stamp the signalling information which passes through the said distinct interface,
and that the said fixed centralization resources comprise:
- at least one signalling database (24, 34, 44, 64), each signalling database being associated with a distinct group of at least one protocol analyser, and thus also with a given type of interface which can be observed;
- resources (25) for transmitting signalling information which is recorded and date-time stamped by each protocol analyser to the signalling database which is associated with the group to which the said protocol analyser belongs.

4. System according to Claim 3, **characterized in that** the said resources for transmitting signalling information which is recorded and date-time stamped by each protocol analyser comprise an independent data transmission network (25) .

5. System according to Claim 1, **characterized in that** the said fixed recording and date-time stamping resources also comprise resources for remote control of each protocol analyser.

6. System according to Claim 1, **characterized in that** the said resources for associating location information with the said signalling information comprise:
- a location database (10);
- at least one set of mobile control equipment (45), comprising in particular:
* a location and date-time stamping device (47) which delivers date-time stamped location information, and
* one of the said mobile stations, called the mobile control station (46),
the said mobile control station (46) functioning in data transmission mode, and co-operating with the said location device (47) in such a way that the said date-time stamped location information is transmitted, in particular via a communication which is set up by the said mobile control station on the said cellular network, to the said location database (10) ,
signalling information in relation to the said communication being recorded and date-time stamped by at least one of the said protocol analysers, and transmitted to and stored in the signalling database which is associated with the group to which the said protocol analyser belongs;
- resources (20) for synchronizing each signalling database with the said location database, in such a way that at least some of the said date-time stamped signalling information which is stored in each signalling database is associated with date-time stamped location information which is stored in the said location database.

7. System according to Claim 6, **characterized in that** the said location and date-time stamping device (47) is a device for location by satellites, of simple or differential GPS type.

8. System according to Claim 7, **characterized in that** it also comprises a fixed location station, the said date-time stamped location information which is transmitted by the said mobile control station being combined with a flow of data from the said fixed location station before being stored in the said location database, in such a way as to increase the precision of the location.

9. System according to Claim 6, **characterized in that** each set of mobile control equipment (45) also comprises resources (48) for formatting the said date-time stamped location information which is supplied by the location and date-time stamping device (47), in such a way that it can be inserted into the frames which are transmitted by the said mobile control station (46).

10. System according to Claim 6, **characterized in that** it also comprises resources (40) for processing and presenting the date-time stamped signalling information and its associated date-time stamped location information.

11. System according to Claim 1, **characterized in that** the said cellular network is of GSM type.

12. Process for controlling a cellular radiocommunication network with mobile stations (MS), the said cellular network comprising at least one mobile switching centre (MSC), making it possible to interconnect the cellular network with a public switched telephone network (PSTN), at least one base station controller (BSC) being linked to each mobile switching centre (MSC), at least one base station (BTS) being linked to each base station controller (BSC), each base station (BTS) being associated with a geographical cell, the said cellular network having various types of interface which can be observed,
the said process being **characterized in that** it comprises:
- a stage (51) to record and date-time stamp the signalling information which passes through at least one observed interface, in such a way as to obtain recorded and date-time stamped signalling information;
- a stage to centralize the said recorded and date-time stamped signalling information;
- a stage to generate and date-time stamp location information which is related to the said recorded and date-time stamped signalling information, in such a way as to obtain date-time stamped location information;
- a stage (54) to associate the said date-time stamped location information with the said recorded and date-time stamped signalling information, in such a way as to locate precisely those segments of the said cellular network which are situated downstream of each interface on which signalling information is recorded.

13. Process according to Claim 12, **characterized in that** the said recording, date-time stamping and centralization stage (51) for signalling information consists of:
- recording and date-time stamping (52), with the help of one or more fixed protocol analysers, signalling information which passes through one or more interfaces of one or more of the said types of interface which can be observed;
- transmitting (53), via an independent data transmission network, recorded and date-time stamped signalling information to one or more signalling databases, each associated with one of the said types of interface which can be observed.

14. Process according to one of Claims 12 and 13, **characterized in that** the said various types of interface which can be observed comprise:
- interfaces Abis, each situated between a base station (BTS) and the corresponding base station controller (BSC);
- interfaces A, each situated between a base station controller (BSC) and the corresponding mobile switching centre (MSC);
- "telephone CCITT 7" interfaces, each situated between:
* two mobile switching centres (MSC), or
* one mobile switching centre (MSC) and the corresponding public switched telephone network (PSTN), or
* one mobile switching centre (MSC) and a transit exchange;
- MAP interfaces, each situated between a mobile switching centre (MSC) and a specialized database (HLR, VLR, AuC) of the said cellular network.

15. Process according to one of Claims 12 to 14, **characterized in that** the said stage (54) of associating location information with signalling information consists of:
- transmitting (55) to a location database, in particular via a communication which is set up by a so-called mobile control station (MS), on the said cellular network, date-time stamped location information which is supplied by a locating and date-time stamping device;
signalling information in relation to the said communication which is set up by the mobile control station being recorded and date-time stamped by at least one of the said protocol analysers, and transmitted to and then stored in (56) the signalling database which is associated with the group to which the said protocol analyser belongs;
- synchronizing (57) each signalling database with the said location database, in such a way that at least some of the said date-time stamped signalling information which is stored in each signalling database is associated with date-time stamped location information which is stored in the location database.

## Patentansprüche

1. Steuerungssystem eines Funkzellennetzes mit mobilen Stationen (MS), wobei das Zellennetz mindestens eine Vermittlungsstelle des mobilen Systems (MSC) aufweist, die das Zusammenschalten des Zellennetzes mit einem Telefonfestnetz (RTCP) ermöglicht, wobei mindestens eine Steuereinrichtung der Basisstation (BSC) mit einer jeden Vermittlungsstelle des mobilen Systems (MSC) verbunden ist, mindestens eine Basisstation (BTS) mit einer jeden Steuereinrichtung einer Basisstation (BSC) verbunden ist, jede Basisstation (BTS) einer geographischen Zelle zugeordnet ist, wobei das Zellennetz verschiedene Schnittstellenarten aufweist, die beobachtet werden können; das Steuerungssystem ist **dadurch gekennzeichnet, dass** es folgendes umfasst:
- feste Aufzeichnungs- und Zeiterfassungsmittel (22₁, 22₂, 22₃, 32₁, 32₂, 32₃, 42₁, 42₂, 42₃, 62₁, 62₂, 62₃) für Signalisierungsinformationen, die über mindestens eine beobachtete Schnittstelle laufen, um aufgezeichnete und zeitlich erfasste Signalisierungsinformation zu erhalten;
- feststehende Zentralisierungsmittel (24, 34, 44, 64, 25) der mit Zeiterfassung aufgezeichneten Signalisierungsinformationen;
- Mittel zum Erzeugen zeiterfasster Lokalisierungsinformationen, die mit den zeiterfassten aufgezeichneten Signalisierungsinformationen in Verbindung stehen, zum Erhalten zeiterfasster Lokalisierungsinformationen;
- Mittel (45, 10, 20) zum Assoziieren dieser zeiterfassten Lokalisierungsinformationen mit den aufgezeichneten und zeiterfassten Signalisierungsinformationen, um Segmente des Zellennetzes, die vor jeder Schnittstelle liegen, auf welcher Signalisierungsinformationen aufgezeichnet sind, genau zu orten.

2. System nach Anspruch 1, **dadurch gekennzeichnet, dass** die verschiedenen beobachtbaren Schnittstellenarten folgendes umfassen:
- die Schnittstellen Abis, die jeweils zwischen einer Basisstation (BTS) und der Steuereinrichtung der entsprechenden Basisstation (BSC) liegen;
- die Schnittstellen A, die jeweils zwischen einer Steuereinrichtung einer Basisstation (BSC) und der entsprechenden Vermittlungsstelle des mobilen Systems (MSC) liegen;
- die Schnittstellen "CCITT 7 telefonisch", die jeweils zwischen den folgenden Stellen liegen:
* zwei Vermittlungsstellen des mobilen Systems (MSC) oder
* einer Vermittlungsstelle des mobilen Systems (MSC) und dem entsprechenden Telefonfestnetz (RTCP) oder
* einer Vermittlungsstelle des mobilen Systems (MSC) und einem Verteilerfernamt;
- die Schnittstellen MAP, die sich jeweils zwischen einer Vermittlungsstelle des mobilen Systems (MSC) und einer spezialisierten Datenbank (HLR, VLR, AuC) des Zellennetzes befinden.

3. System nach Anspruch 1, **dadurch gekennzeichnet, dass** die festen Aufzeichnungs- und Zeiterfassungsmittel folgendes umfassen:
- mindestens eine Gruppe (21, 31, 41, 61) von mindestens einem Protokollanalysator (22₁, 22₂, 22₃, 32₁, 32₂, 32₃, 42₁, 42₂, 42₃, 62₁, 62₂, 62₃), wobei jeder Protokollanalysator einer selben Gruppe mit dem Zellennetz auf der Höhe von mindestens einer unabhängigen Schnittstelle derselben Art verbunden ist, um Signalisierungsinformationen, die über diese unabhängige Schnittstelle laufen, aufzuzeichnen und zeitlich zu erfassen,
und, dass die festen Zentralisierungsmittel folgendes umfassen:
- mindestens eine Signalisierungsdatenbank (24, 34, 44, 64), wobei jede Signalisierungsdatenbank mit einer unabhängigen Gruppe von mindestens einem Protokollanalysator und somit auch mit einer gegebenen Art von beobachtbaren Schnittstellen assoziiert ist;
- Mittel (25) zum Übertragen von durch jeden Protokollanalysator aufgezeichneten und zeiterfassten Signalisierungsinformationen und die Signalisierungsdatenbank, die mit der Gruppe assoziiert ist, zu welcher der erwähnte Protokollanalysator gehört.

4. System nach Anspruch 3, **dadurch gekennzeichnet, dass** die Mittel zum Übertragen von durch jeden Protokollanalysator aufgezeichneten und zeiterfassten Signalisierungsinformationen ein selbständiges Datenübertragungsnetz (25) umfassen.

5. System nach Anspruch 1, **dadurch gekennzeichnet, dass** die festen Aufzeichnungs- und Zeiterfassungsmittel auch Fernsteuerungsmittel eines jeden Protokollanalysators umfassen.

6. System nach Anspruch 1, **dadurch gekennzeichnet, dass** die Mittel zum Assoziieren von Lokalisierungsinformationen zu den Signalisierungsinformationen folgendes umfassen:
- eine Lokalisierungsdatenbank (10);
- mindestens eine mobile Steuereinrichtung (45), die insbesondere folgendes umfasst:
* eine Aufzeichnungs- und Zeiterfassungsvorrichtung (47), die zeiterfasste Lokalisierungsinformationen liefert, und
* eine der erwähnten mobilen Stationen, genannt mobile Steuerstation (46),
wobei die mobile Steuerstation (46) im Datenübertragungsmodus funktioniert und mit der Lokalisierungsvorrichtung (47) zusammenwirkt, um sicherzustellen, dass die aufgezeichneten und zeiterfassten Lokalisierungsinformationen insbesondere über einen von der mobilen Steuerstation auf dem Zellennetz festgelegten Verbindungsweg zur Lokalisierungsdatenbank (10) gesendet werden,
wobei diese Verbindung betreffende Signalisierungsinformationen von mindestens einem der erwähnten Protokollanalysatoren aufgezeichnet und zeiterfasst werden, um dann an die Signalisierungsdatenbank gesendet und dort gespeichert zu werden, die mit der Gruppe assoziiert ist, zu weicher der erwähnte Protokollanalysator gehört;
- Mittel (20) zum Synchronisieren einer jeden Signalisierungsdatenbank mit der Lokalisierungsdatenbank, so dass mindestens einige der aufgezeichneten und zeiterfassten Signalisierungsinformationen, die in einer jeden Signalisierungsdatenbank gespeichert sind, mit in dieser Lokalisierungsdatenbank gespeicherte, aufgezeichnete und zeiterfasste Lokalisierungsinformationen assoziiert werden.

7. System nach Anspruch 6, **dadurch gekennzeichnet, dass** es sich bei der Lokalisierungs- und Zeiterfassungsvorrichtung (47) um ein Satellitenortungssystem des einfachen oder differentiellen GPS Typs handelt.

8. System nach Anspruch 7, **dadurch gekennzeichnet, dass** es ebenfalls eine feste Lokalisierungsstation umfasst, wobei die von der mobilen Steuerstation übertragenen zeiterfassten Lokalisierungsinformationen mit einem Datenfluss kombiniert werden, der von der Lokalisierungsstation kommt, bevor sie in der Lokalisierungsdatenbank gespeichert werden, um die Lokalisierungsgenauigkeit zu erhöhen.

9. System nach Anspruch 6, **dadurch gekennzeichnet, dass** jede mobile Steuervorrichtung (45) ebenfalls über Mittel (48) zum Formatieren der von der Lokalisierungs- und Zeiterfassungsvorrichtung (47) gelieferten zeiterfassten Lokalisierungsinformationen verfügt, um diese in Raster einfügen zu können, die von den erwähnten mobilen Steuerstationen (46) gesendet werden.

10. System nach Anspruch 6, **dadurch gekennzeichnet, dass** es ebenfalls über Mittel (40) zum Bearbeiten und Vorstellen der zeiterfassten Signalisierungsinformationen und der mit ihnen assoziierten zeiterfassten Lokalisierungsinformationen verfügt.

11. System nach Anspruch 1, **dadurch gekennzeichnet, dass** das Zellennetz vom Typ GSM ist.

12. Steuerungsverfahren eines Funkzellennetzes mit mobilen Stationen (MS), wobei das Zellennetz mindestens eine Vermittlungsstelle des mobilen Systems (MSC) aufweist, die das Zusammenschalten des Zellennetzes mit einem Telefonfestnetz (RTCP) ermöglicht, wobei mindestens eine Steuereinrichtung der Basisstation (BSC) mit einer jeden Vermittlungsstelle des mobilen Systems (MSC) verbunden ist, mindestens eine Basisstation (BTS) mit einer jeden Steuereinrichtung einer Basisstation (BSC) verbunden ist, jede Basisstation (BTS) einer geographischen Zelle zugeordnet ist, wobei das Zellennetz verschiedene Schnittstellenarten aufweist, die beobachtet werden können;
das Steuerungssystem ist **dadurch gekennzeichnet, dass** es folgendes umfasst:
- einen Aufzeichnungs- und Zeiterfassungsschritt (51) der Signalisierungsinformationen, die über mindestens eine beobachtete Schnittstelle laufen, um aufgezeichnete und zeiterfasste Signalisierungsinformationen zu erhalten;
- einen Schritt zum Zentralisieren dieser aufgezeichneten und zeiterfassten Signalisierungsinformationen;
- einen Schritt zum Erzeugen und Zeiterfassen der Lokalisierungsinformation, die mit den aufgezeichneten und zeiterfassten Signalisierungsinformationen in Verbindung stehen, um zeiterfasste Lokalisationsinformationen zu erhalten;
- einen Schritt (54) zum Assoziieren der zeiterfassten Lokalisierungsinformationen mit den aufgezeichneten und zeiterfassten Signalisierungsinformationen, zum genauen Lokalisieren von Segmenten des Zellennetzes, die nach einer jeden Schnittstelle liegen, auf der Signalisierungsinformationen aufgezeichnet sind.

13. Verfahren nach Anspruch 12, **dadurch gekennzeichnet, dass** der Schritt (51 ) zum Aufzeichnen, Zeiterfassen und Zentralisieren der Signalisierungsinformationen folgendes umfasst:
- Aufzeichnung und Zeiterfassung (52) der Signalisierungsinformationen, die über eine oder mehrere Schnittstellen derselben oder mehrerer dieser beobachtbaren Schnittstellentypen laufen, mit Hilfe einer oder mehrerer feststehender Protokollanalysatoren;
- Senden (53) der aufgezeichneten und zeiterfassten Signalisierungsinformationen über ein unabhängiges Datenübertragungsnetz zu einer Signalisierungsdatenbank oder zu mehreren Signalisierungsdatenbanken, die jeweils mit einem der beobachtbaren Schnittstellentypen assoziiert sind.

14. Verfahren nach einem der Ansprüche 12 und 13, **dadurch gekennzeichnet, dass** die verschiedenen beobachtbaren Schnittstellentypen folgendes umfassen:
- die Schnittstellen Abis, die jeweils zwischen einer Basisstation (BTS) und der Steuereinrichtung der entsprechenden Basisstation (BSC) liegen;
- die Schnittstellen A, die jeweils zwischen einer Steuereinrichtung einer Basisstation (BSC) und der entsprechenden Vermittlungsstelle des mobilen Systems (MSC) liegen;
- die Schnittstellen "CCITT 7 telefonisch", die jeweils zwischen den folgenden Stellen liegen:
* zwei Vermittlungsstellen des mobilen Systems (MSC) oder
* einer Vermittlungsstelle des mobilen Systems (MSC) und dem entsprechenden Telefonfestnetz (RTCP) oder
* einer Vermittlungsstelle des mobilen Systems (MSC) und einem Verteilerfernamt;
- die Schnittstellen MAP, die sich jeweils zwischen einer Vermittlungsstelle des mobilen Systems (MSC) und einer spezialisierten Datenbank (HLR, VLR, AuC) des Zellennetzes befinden.

15. Verfahren nach einem der Ansprüche 12 bis 14, **dadurch gekennzeichnet, dass** der Schritt (54) zum Assoziieren von Lokalisierungsinformationen zu den Signalisierungsinformationen folgendes umfasst:
- Senden (55), über das Zellennetz, von durch eine Lokalisierungs- und Zeiterfassungsvorrichtung gelieferte zeiterfassten Lokalisierungsinformationen, insbesondere über eine durch eine Steuerstation genannte, mobile Station (MS) aufgebaute Verbindung, zu einer Lokalisierungsdatenbank;
wobei Signalisierungsinformationen, welche die erwähnte von der mobilen Steuerstation aufgebauten Verbindung betreffen, von mindestens einem der Protokollanalysatoren aufgezeichnet und zeiterfasst und dann an die Signalisierungsdatenbank gesendet und dort gespeichert zu werden (56), die mit der Gruppe assoziiert ist, zu welcher der Protokollanalysator gehört;
- Synchronisieren (57) einer jeden Signalisierungsdatenbank mit der Lokalisierungsdatenbank, damit mindestens einige der in jeder Signalisierungsdatenbank gespeicherten, zeiterfassten Signalisierungsinformationen mit zeiterfassten Lokalisierungsinformationen assoziiert werden, die in der Lokalisierungsdatenbank gespeichert sind.
